# EUROPEAN PATENT APPLICATION

(11) **EP 2 781 447 A1**
(43) Date of publication of application: **24.09.2014**
(21) Application number: 12841862.1
(22) Date of filing: 17.10.2012
(51) Int. Cl.: B63B 22/00, G01S 5/00, G08B 25/10

(54) **METHOD FOR TRANSFERRING DATA BETWEEN AT LEAST ONE LAGRANGIAN BUOY FOR MEASURING CURRENTS FOR OCEAN AND COASTAL ENVIRONMENTS AND A BASE STATION, AND LAGRANGIAN BUOY FOR MEASURING CURRENTS FOR OCEAN AND COASTAL ENVIRONMENTS**

(30) Priority: 18.10.2011 ES 201131669
(71) Applicant: Consejo Superior De Investigaciones Científicas (CSIC), 28006 Madrid (ES); Universidad de Las Islas Baleares (UIB), 07071 Palma de Mallorca (ES)
(72) Inventor: MARTÍNEZ LEDESMA, Miguel, E-07190 Esporles (Mallorca) (ES); ÁLVAREZ DÍAZ, Alberto, E-07190 Esporles (Mallorca) (ES); VIZOSO MIQUEL DEL SOLA, Guillermo, E-07190 Esporles (Mallorca) (ES); TINTORÉ SUBIRANA, Joaquín, E-07190 Esporles (Mallorca) (ES)
(74) Representative: Pons Ariño, Angel
(86) International application number: PCT/ES2012/070716
(87) International publication number: WO 2013/057346

(57) **Abstract**

Method for transferring data between at least one lagrangian buoy for measuring currents for ocean and coastal environments and a base station, which comprises capturing data by the buoy by means of the parameter-measuring sensors and the GPS receiver and storing said data in a first file which is segmented into packets of a maximum length defined by the SBD Iridium protocol for the subsequent sending thereof to the base station. The invention also relates to the lagrangian buoy for measuring currents for ocean and coastal environments which is used in the method.

## Description

### OBJECT OF THE INVENTION

The present invention, as stated in the title of this description, relates on the one hand to a method for transferring data between current-measuring Lagrangian buoys for ocean and coastal environments and a base station and on the other hand also relates to the used current-measuring Lagrangian buoys themselves (drifters) for ocean and coastal environments. The main field of application of the present invention is oceanographic instrumentation for measuring currents and other physical and chemical parameters. The context of their use is within oceanographic monitoring and research, and also in oil-spill tracking and Search-And-Rescue operations.

The novel design of the buoy forming the object of the present invention reduces the risks associated to its use in coastal environments where there is a lot of maritime traffic. It achieves this increase in safety by minimising its size and weight, thereby reducing the possible effect it could have in a collision with maritime traffic. In order to be able to achieve this reduction in its mechanical characteristics it makes use of energy efficient electronic devices, a two-way satellite communications system and techniques for the storage, compression and transfer of data. The use of these techniques in turn makes it possible to reduce the costs associated to communications and to increase the lifespan of the buoy. The end user can modify the buoy's operation (e.g. sampling periods of its sensors) by transferring configurations through the two-way satellite system. This instrument additionally has the capacity to execute files (programme codes) transferred by means of the satellite communications system, thereby being able to connect multiple sensors and to execute functions dynamically. An activation system by configuration time makes it possible to guarantee the message transfer time and the configuration of automatic operating modes in order to facilitate their recovery.

### BACKGROUND OF THE INVENTION

The most standard Lagrangian buoys (or drifters) in the industry are the SVP and CODE drifters. These instruments transmit their position periodically so that their drift can be calculated over time using satellite communication systems.

SVP (Surface Velocity Program) drifters, developed in the context of the TOGA (Tropical Ocean Global Atmosphere) experiment and WOCE (World Ocean Circulation Experiment), have been designed to measure currents typically at depths of 15 metres and present lifespans of 2 years at maximum although their average service life is approximately 15 months.

CODE (Coastal Ocean Dynamics Experiment) drifters are in contrast capable of measuring the current form the surface layer up to a depth of one metre, and incorporate a set of batteries for a lifespan of approximately 9 months.

The high lifespan of standard drifters is achieved by means of using a large number of batteries, thereby achieving a large weight and size. Standard SVP drifters have a spherical design with a 40cm diameter and a total weight of 40kg. The reduced version of the SVP model (mini-SVP) has a diameter of 32cm and weighs 15kg. CODE drifters have a tubular design of 1 metre in length and a total weight of 8.4kg.

Commonly, Lagrangian buoys have used the 'Argos' satellite communication system. This communication system allows one-way short messages to be transferred from the buoy to a receiving station on earth, obtaining also positioning data using the Doppler effect on the signal transmitted to the satellite. A new version of this satellite system called 'Argos-3' allows for a two-way message transfer, thereby making it possible to reduce the quantity of redundant messages transmitted and therefore to reduce power consumption.

Although there are multiple satellite communication systems used in commercial drifters (Orbcomm, Inmarsat, etc.), the 'Iridium' system is the only provider of global and continuous voice and data communications via satellite with coverage across the entire surface of the Earth. Iridium's short message transfer system, called SBD (Short Burst Data), is being used at present by different companies that manufacture drifters so as to minimise the costs and power consumption of their buoys and to provide two-way links to said instruments.

### DESCRIPTION OF THE INVENTION

In order to achieve the objectives and overcome the drawbacks mentioned above, the invention consists on the one hand of a method for transferring data between current-measuring Lagrangian buoys for ocean and coastal environments and a base station and on the other hand consists of the Lagrangian buoys (drifters) themselves used in the transfer method.

The present invention has the objective of reducing the size and weight of the standard Lagrangian buoys with a view to minimising the effects that could be generated in the case of a collision with maritime traffic, making it safe when currents make the buoy drift towards coastal zones. This minimisation is obtained by reducing the number and size of the batteries used, while maintaining the lifespan provided by existing commercial drifters.

The use of the Iridium SBD system and the data storage and compression systems implemented in the present invention reduce the communication costs associated to satellite transfers. The use of the Iridium SBD two-way communications link makes it possible to reduce consumption and to configure the buoy remotely. In turn, the two-way communication system allows the transfer of code files to the buoy, making it possible to modify its behaviour in real time so as to add new sensors and instruments or to run new functions dynamically. A time-based configuration activation system makes it possible to guarantee the time for transferring messages and the configuration of automatic operating modes in order to facilitate recovery.

Therefore, the method for transferring data between at least one current-measuring Lagrangian buoy for ocean and coastal environments and a base station described in the present application comprises the use of at least one buoy incorporating at least one Iridium antenna and at least one GPS antenna, one GPS receiver, parameter-measuring sensors, an Iridium SBD communications modem and an external removable memory. Said method is characterised in that it comprises selecting as a previous phase a data transfer mode between a conventional mode and a mode comprising the following phases:
i) the user configuring a period for capturing data by the parameter-measuring sensors and the GPS receiver and a period for transferring data from the buoy to the base station;
ii) the buoy capturing data by means of the parameter-measuring sensors and the GPS receiver at the moments corresponding to the data capture period established in phase i);
iii) storing the data captured during the data transfer period established in phase i) in at least one first file of the external removable memory and selecting it;
iv) segmenting the selected file in packages having a maximum length defined by the Iridium SBD communications modem once the data transfer period has expired;
v) sending the packages from the buoy to the base station by means of the Iridium SBD protocol;
vi) checking, on the part of the buoy, of the receipt of short messages and packages from the base station and;
vii)the base station rearranging and verifying the data contained in the Iridium SBD messages received.

In one embodiment of the invention, as stages previous to the segmentation of phase iv), the method comprises:
- compressing, when the data transfer period has expired, at least one first file; and,
- comparing the sizes of the first original file and the first compressed file and selecting the smaller-sized one.

In another embodiment of the invention, the conventional way of transferring data comprises the sending of data from the buoy to the base station by means of the message sending following the format defined by the DBCP (Data Buoy Cooperation Panel) for sending messages from SVP-B buoys using the Iridium SBD communications system. The compression of the at least one first file, in another embodiment of the invention, is carried out by means of an algorithm selected between a GZIP and another ZLIB algorithm.

In another embodiment of the invention, the base station sends short messages and files by means of the Iridium SBD protocol to the buoys. In another embodiment of the invention, as a phase previous to sending files from the base station to the buoys, these files are compressed in the base station by means of an algorithm selected between GZIP and ZLIB.

In another embodiment of the invention, the information contained in the compressed files comprises being decompressed in the buoy and subsequently executed.

Nonetheless these files will have been previously compressed or not depending on the redundancy and entropy of the information contained in the file. If the compression does not result in a reduction in the size of the file the latter will be sent uncompressed.

In another embodiment of the invention, the short messages sent from the base station to the buoy, the reception of which is checked in phase vi) of the general method, comprise information selected between a new buoy configuration to be activated in the buoy, a request to issue configurations so that the buoy can send the base station a record of the latest activated configurations and remote execution commands to be executed on the buoy.

In another embodiment of the invention, when the short messages received comprise a new configuration of the buoy, it comprises the following phases:
- activating the new configuration, once the tasks of the prior configuration have been completed; and,
- sending a short message from the buoy to the base station with the new configuration received to confirm the change in configuration made.

In another embodiment of the invention, the short messages of the new buoy configuration sent by the base station are selected between:
- type 1 short messages, which comprise configuring internal operating parameters of the buoy;
- type 2 short messages, which comprise modifying the configuration of the data captures of the GPS receiver and the parameter-measuring sensors and selecting the algorithm for compression of the information;

- type 3 short messages, which comprise modifying parameters related to the transmission of the data by means of the Iridium SBD protocol;
- type 4 short messages, which comprise executable commands selected by the user for their execution in the buoy;
- type 5 short messages, which comprise configuring timers which control the data capture period on the part of the parameter-measuring sensors and the GPS receiver, the data transfer period from the buoy to the base station and the command execution period in the buoy; and,
- type 6 short messages, which comprise establishing a time and date of activation of a timer in the buoy for configuring the timers that control the data capture period on the part of the parameter-measuring sensors and the GPS receiver, the data transfer period from the buoy to the base and the command execution period in the buoy.

In another embodiment of the invention, the packages sent in phase v) are automatically retransmitted in the case of a reception failure.

In another embodiment of the invention, the user configures a timer with a determined period for the buoy to verify the existence of short messages and packages pending reception.

In another embodiment of the invention, the user transfers to the buoy commands executable in the buoy in a mode selected between directly through a series port and remotely by means of an Iridium SBD protocol.

In another embodiment of the invention, following the download of the messages received in phase vii) the information contained in the messages is exported to XML and KML formats for the information to be represented by means of visualisation tools. The export is always made to both formats, on the one part KML for representation on Google Earth, and on the other part to XML to generalise the storage and processing of the data.

Another object of the present invention is the current-measuring Lagrangian buoy or drifter for ocean and coastal environments, used in the method described above. Said buoys comprise at least:
- one cylindrical element with its lower base open and which presents a recess on the internal face of the lower end of the cylindrical element;
- one U-shaped element which presents a recess on the outer face of the vertical branches, a hole on its inner face and a protrusion in the central zone of the horizontal branch which comprises a housing for a T-shaped rod;
- an o-ring situated between the cylindrical element and the U-shaped element to seal the inside of the device.
- a sealing element selected between a connector and a vacuum-tight bushing, situated in the hole of the U-shaped element to place measuring sensors.

In one embodiment of the invention, the buoy comprises a plurality of safety and flotation foams on the outer face of the cylindrical element and surrounding it.

In another embodiment of the invention, the buoy comprises anchoring means on the outer face of the base of the U-shaped element.

In another embodiment of the invention, the cylindrical element together with the safety and flotation foam presents a maximum outer diameter of 140 mm and a maximum length of 400 mm.

### BRIEF DESCRIPTION OF THE DRAWINGS

Figure 1.- Shows a side view and a plan view of the mechanical design of the Lagrangian buoy forming the object of the invention.
Figure 2.- Shows a general view of the Lagrangian view with the drogue to which it is joined.
Figure 3.- Shows a scheme of the electronic modules integrating the buoy.
Figure 4.- Shows a diagram of the data transfer method between the Lagrangian buoy and the base station divided into blocks.
Figures 4A-4I.- Show in detail each of the blocks into which the diagram of figure 4 has been divided.
Figure 5.- Shows a second diagram of the data transfer method between the Lagrangian buoy and the base station divided into blocks.
Figures 5A-5H.- Show in detail each of the blocks into which the diagram of figure 5 has been divided.

### DESCRIPTION OF VARIOUS EXAMPLES OF EMBODIMENT OF THE INVENTION

Next, by way of illustration and not limitation, follows a description of various examples of embodiment of the invention, with reference to the numbering used in the drawings.

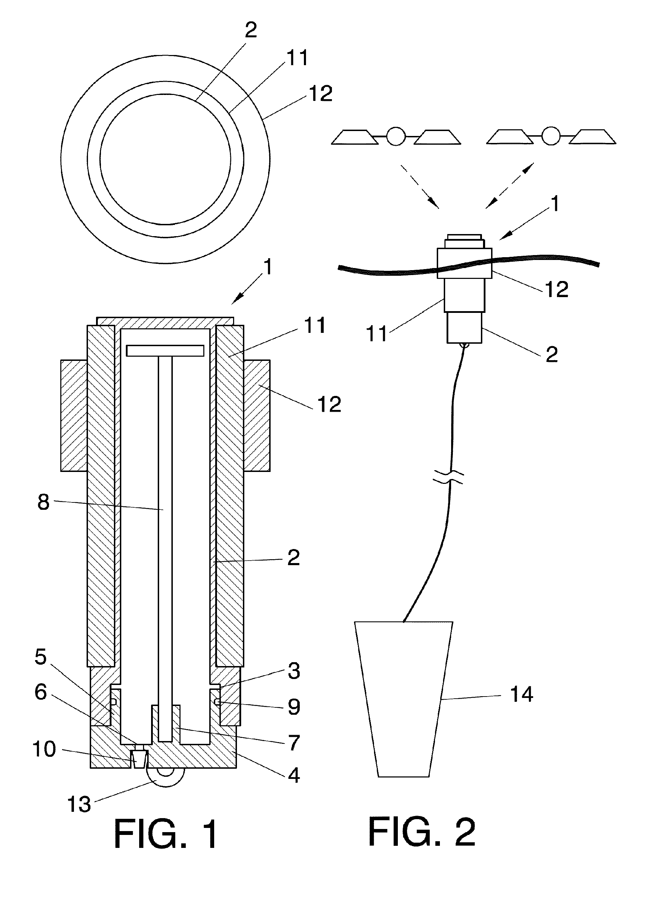

In accordance with figures 1 and 2 of the present invention, the buoy (1) comprises a vacuum-tight mechanical structure of a small size and weight where the electronic components are housed, and a drogue (or drag sail) (14) which increases the friction with the flow of water to allow the current to be followed at a required depth and minimise the effect of drift due to wind. The buoy (1) mainly consists of a cylindrical element (2) with its lower base open and which presents a recess (3) on the internal face of the bottom end of the cylindrical element (2). In the aforementioned recess (3) a U-shaped element (4) is inserted (which will preferably be made of PVC, polyvinyl chloride) which presents another recess (5) on the outer face of the vertical branches of the U, a hole (6) on its internal face and a protrusion (7) in the central zone of the horizontal branch of the U which comprises a housing for a T-shaped rod (8). Furthermore it presents an o-ring (9) to seal the interior of the device and a connector or vacuum-tight bushing (10) closing the aforementioned hole (6). Surrounding the cylindrical element (2) there is a first foam ring (11) and on this first ring (11) a second shorter foam ring (12). On the lower face of the U-shaped element (4), the invention presents anchoring means (13) for the fixing of a drogue or sail (14) (shown in figure 2). The vacuum-tight bushing (10) serves as the outlet for the connection of a sea surface temperature (SST) sensor. The final design of the buoy (1) has a cylindrical shape with a length not exceeding 40cm and a maximum diameter approximately equal to 14cm. The weight of the casing, including the electronic components and batteries does not exceed 3Kg. The outer surface of closed-cell foam (11,12) adds flotation to the mechanical casing of the buoy (1) and reduces the possible effects of a collision, making its use in coastal environments safer.

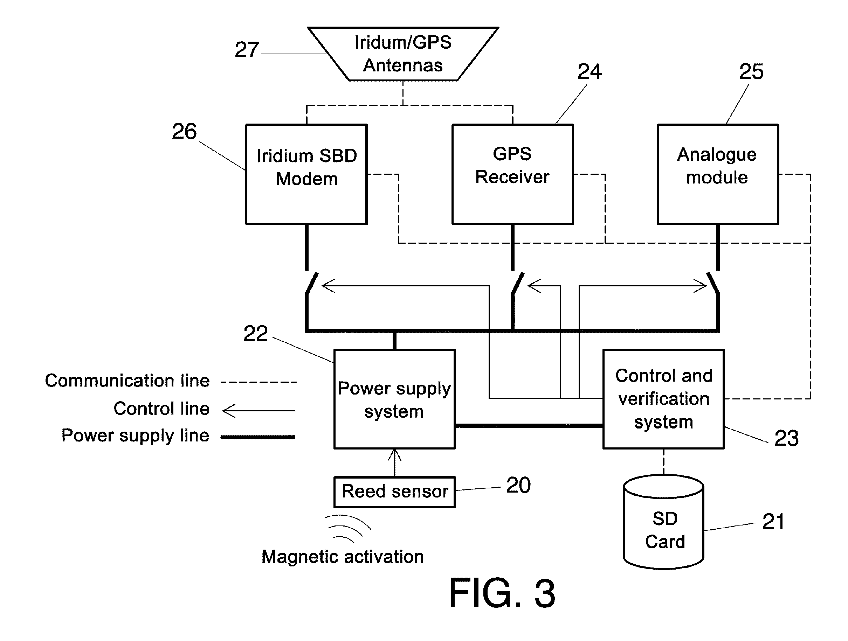

The electronics of the present invention (shown in figure 3) use energy-efficient electronic components with low quiescent current. Several switches based on CMOS transistors disconnect the power supply of the different sensor and transmission modules of the system, thereby reducing power consumption when no measurement or transmission needs to be made (idle times). The power supply system (22) is based on a circuit with a reed-type magnetic sensor (20) which allows activation or deactivation of the electronics externally by using a magnet.

An energy-efficient microcontroller manages the operation control and verification system (23) of the different modules of the system. An energy-efficient GPS receiver (24) with low position acquisition time obtains the situation of the buoy (1). An analogue module (25) is used to amplify and capture the signal from a temperature sensor, a battery voltage measurer, and an external analogue input (for adding other analogue sensors according to demand). An Iridium SBD communications modem (26) (model SBD9601 or SBD9602) is used to transfer the data and receive the configurations. At least two external inputs, not shown in figure 3, with a series port connection are used for adding new sensors or actuators according to the end user's requirements. An SD card (21) with a capacity of up to 2GBytes is used for storing the data.

The electronic assembly is made up of a single printed circuit board where all the devices are positioned. An Iridium/GPS dual antenna (27) is situated on the highest part of the casing to allow the signal to be obtained from said satellite systems. The set of batteries is positioned on the lowest possible part of the casing to increase the buoy's dynamic stability.

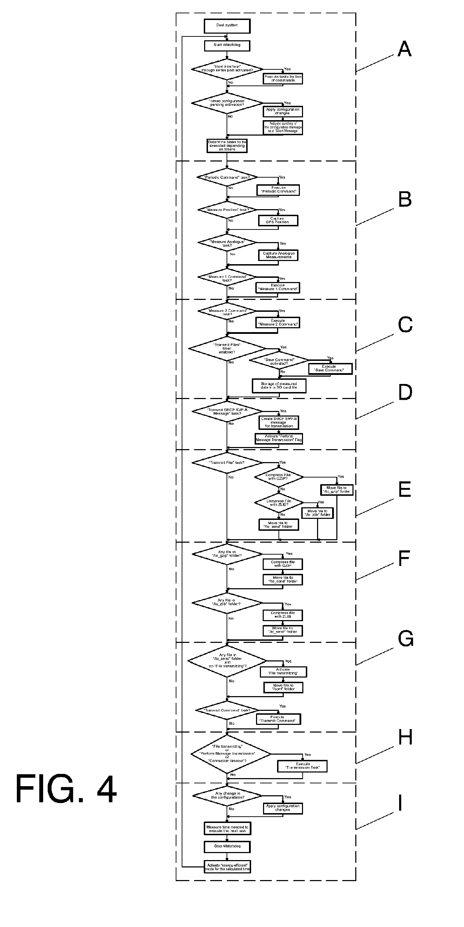

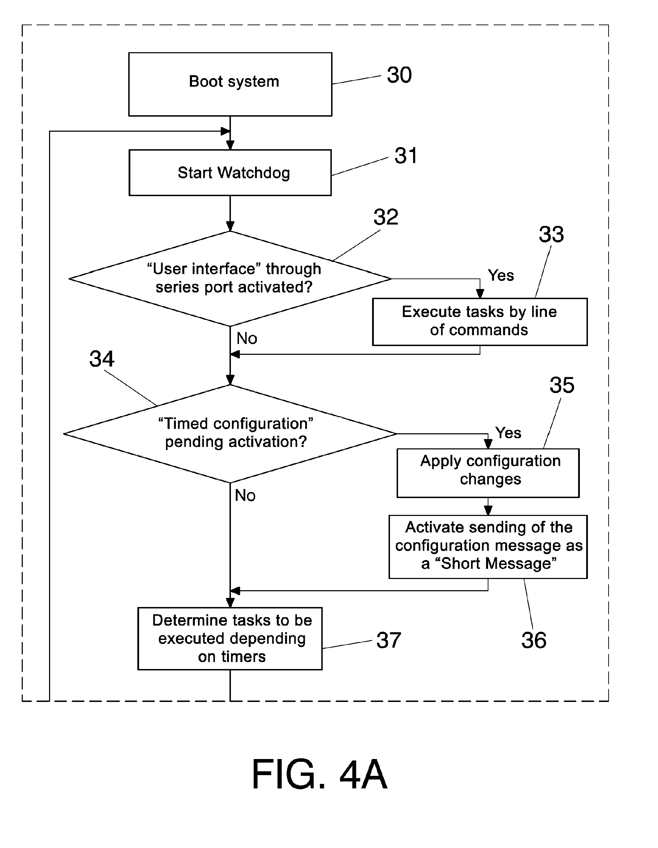

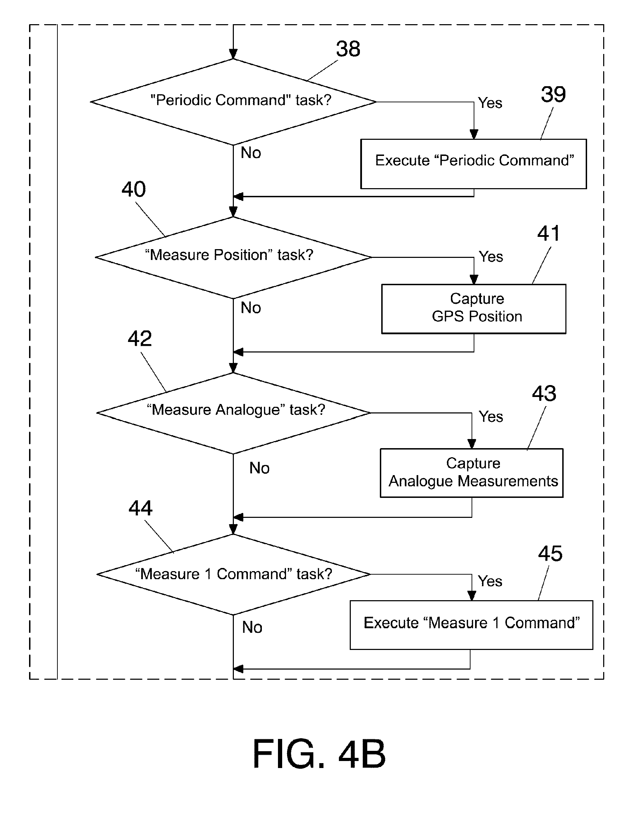

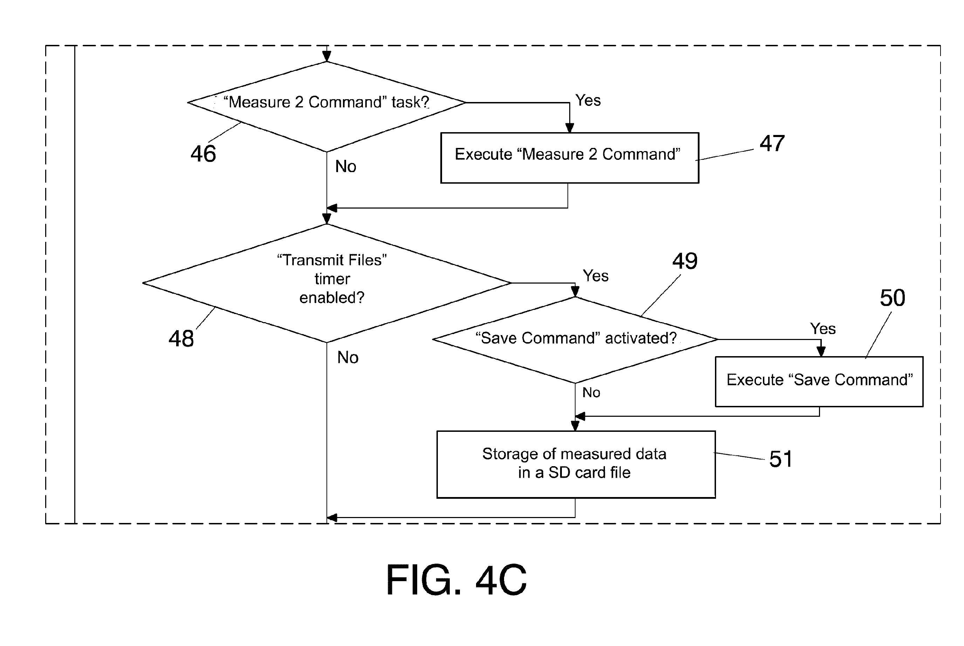

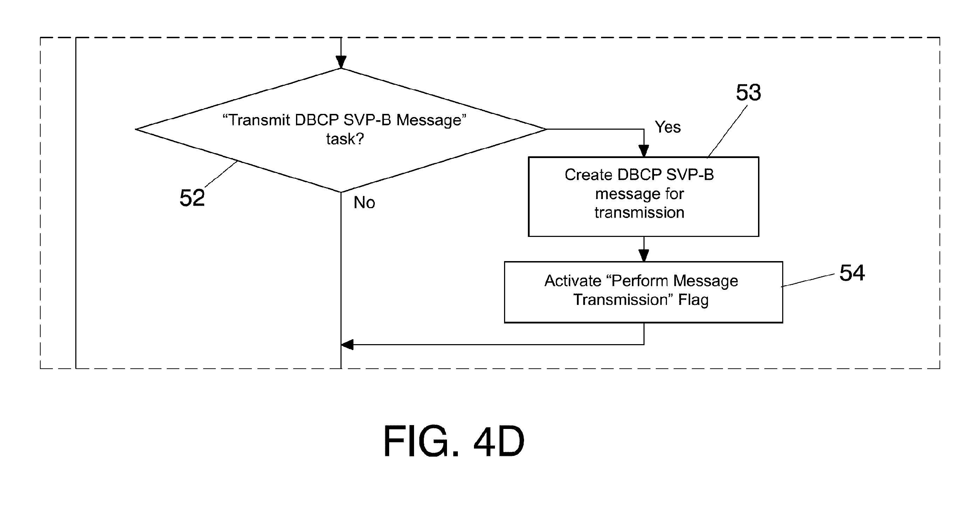

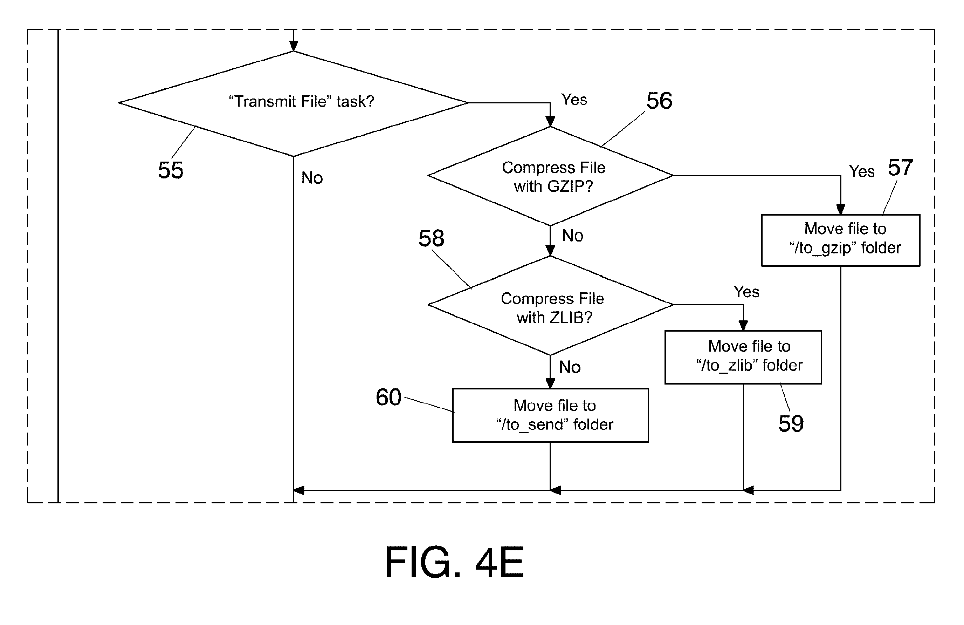

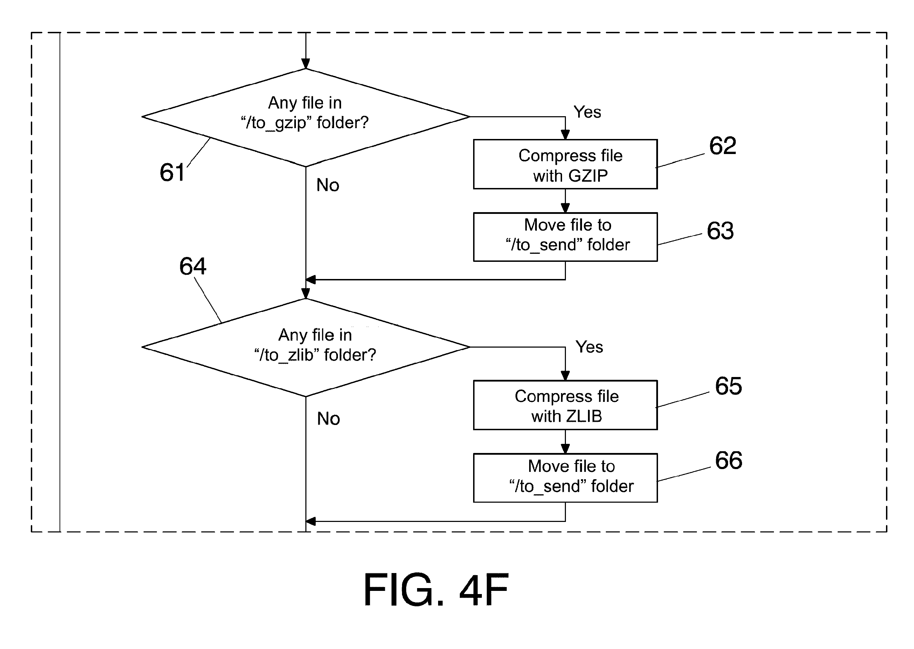

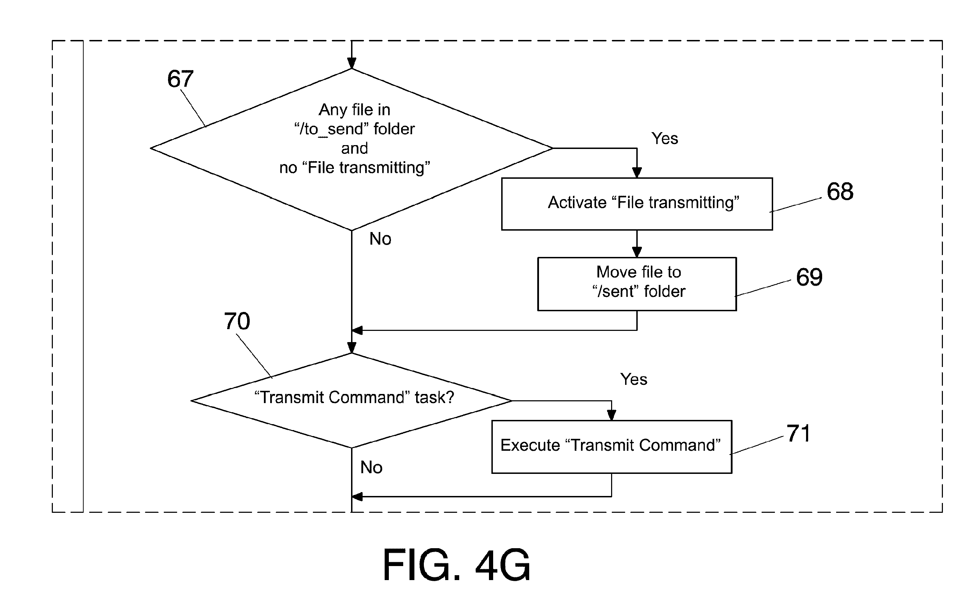

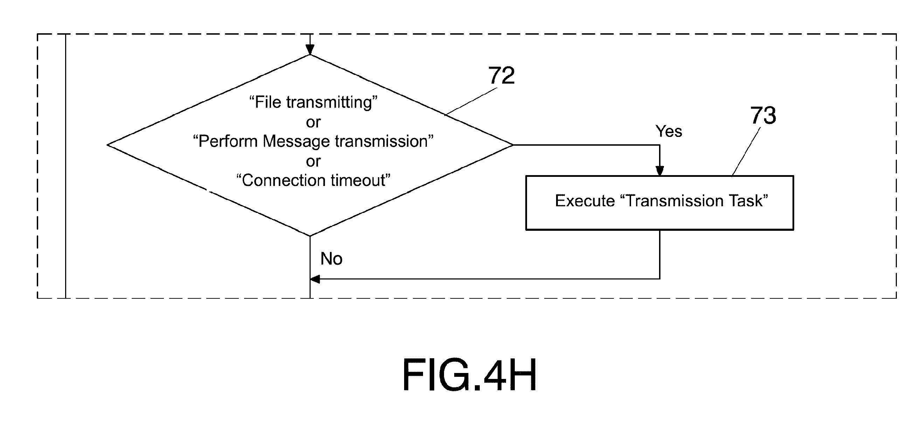

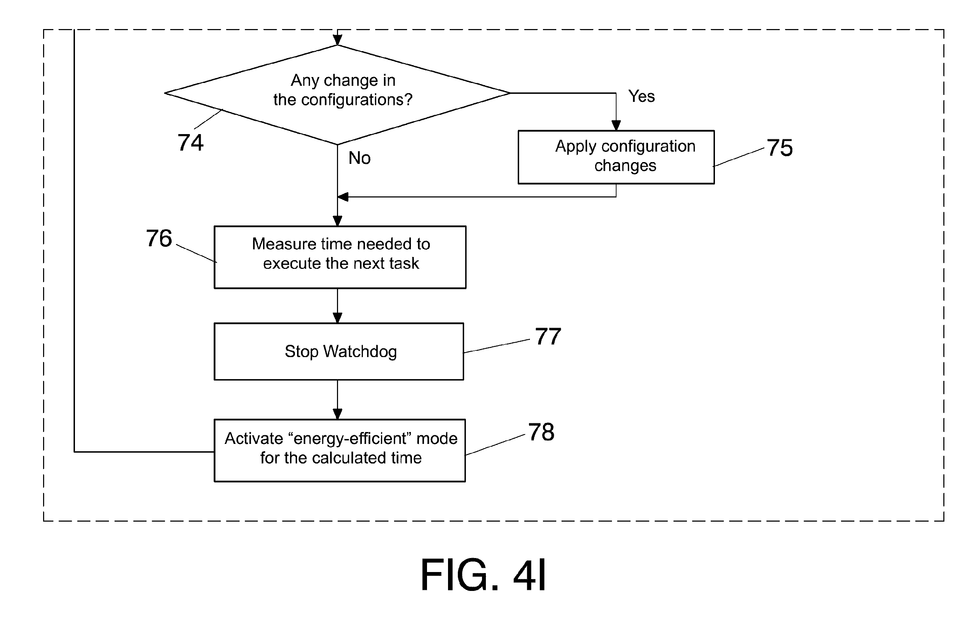

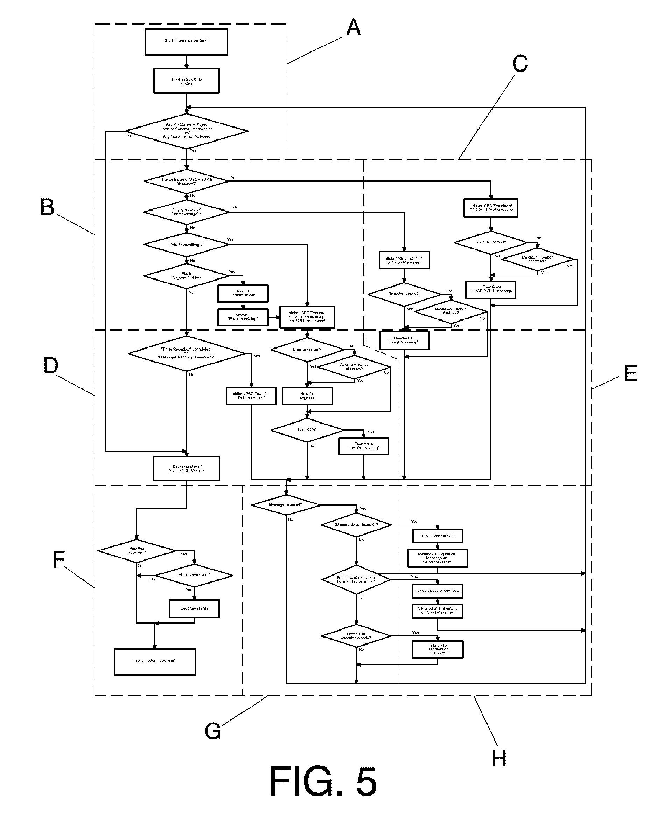

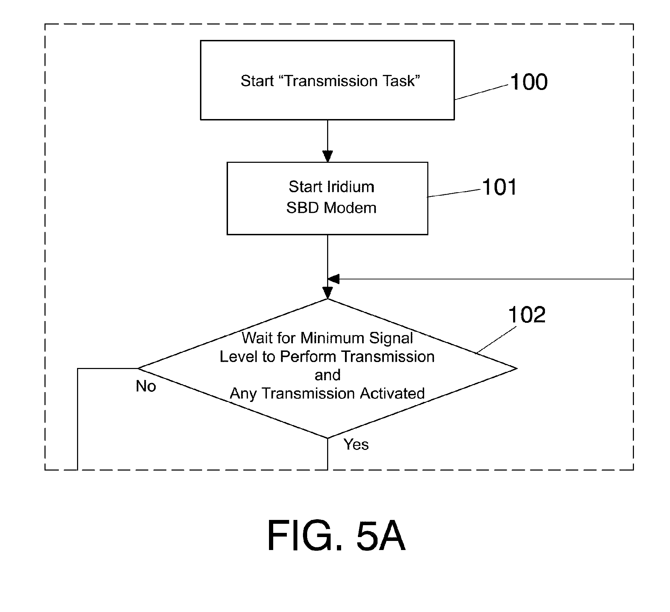

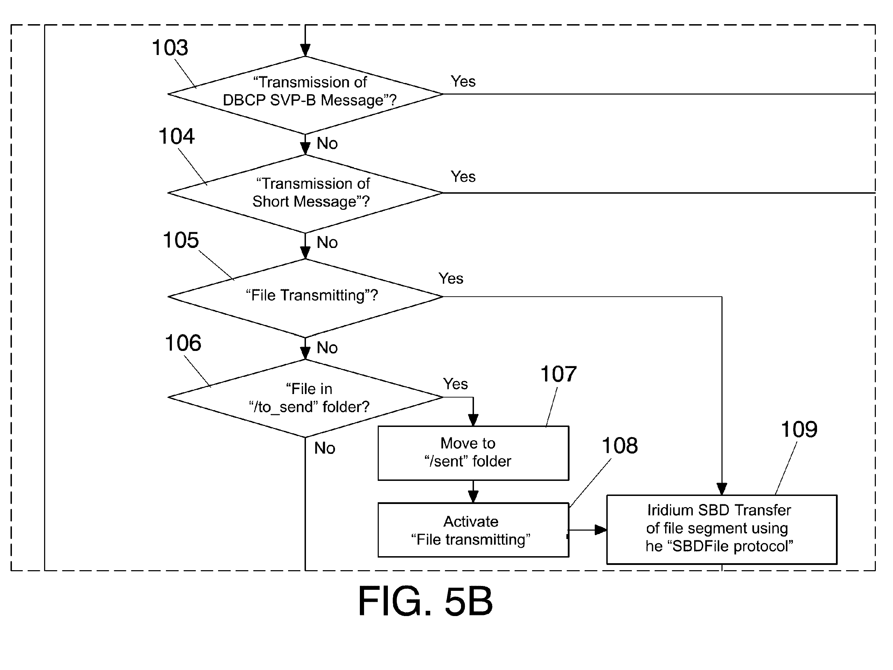

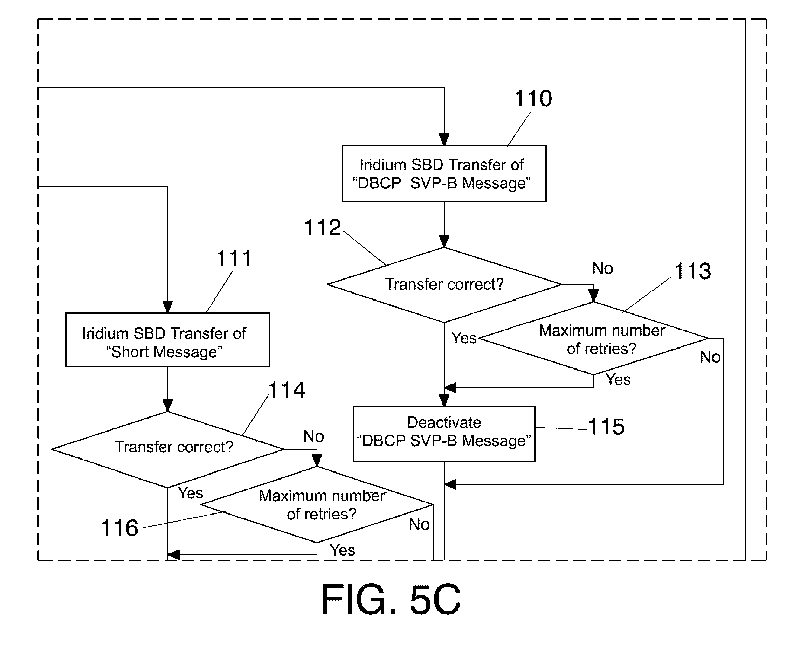

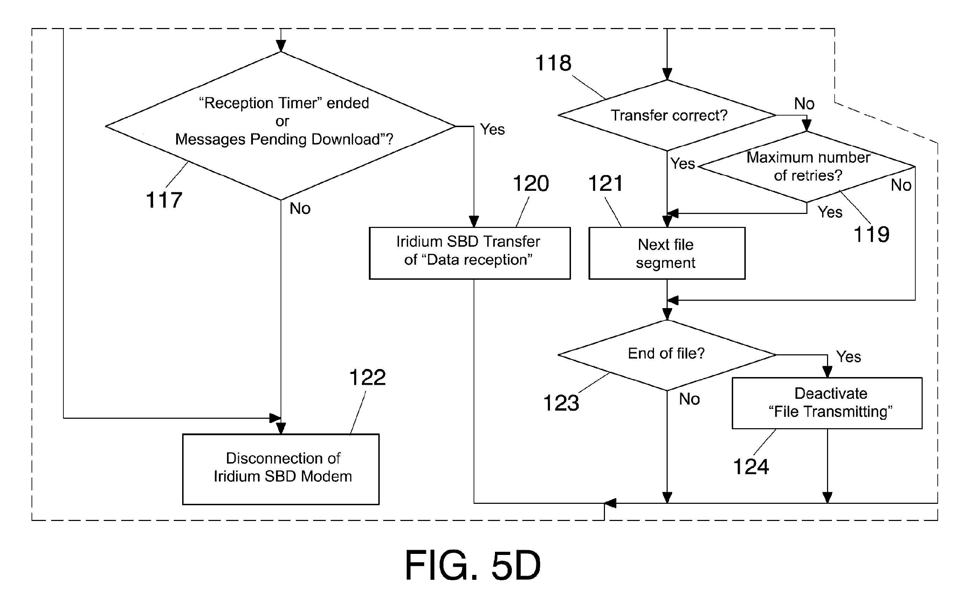

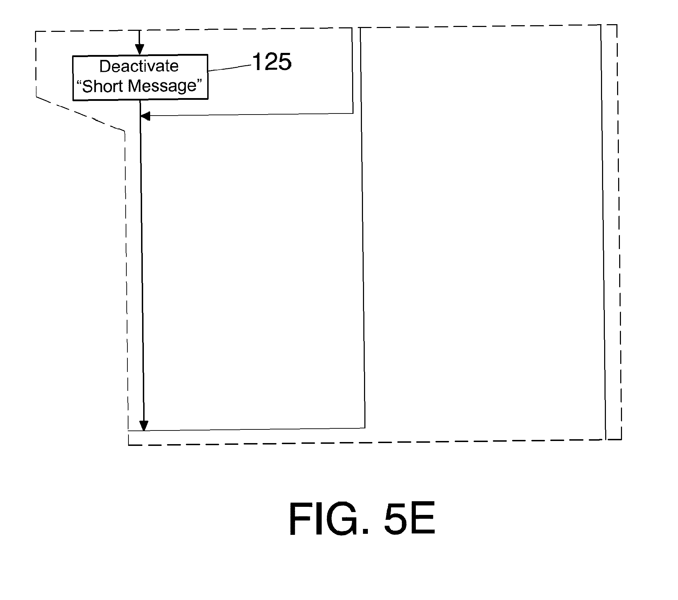

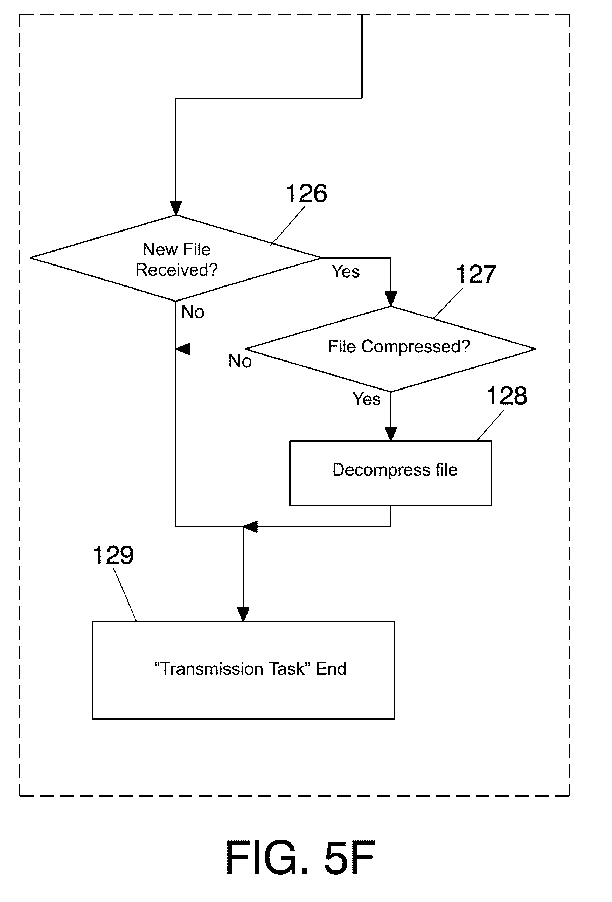

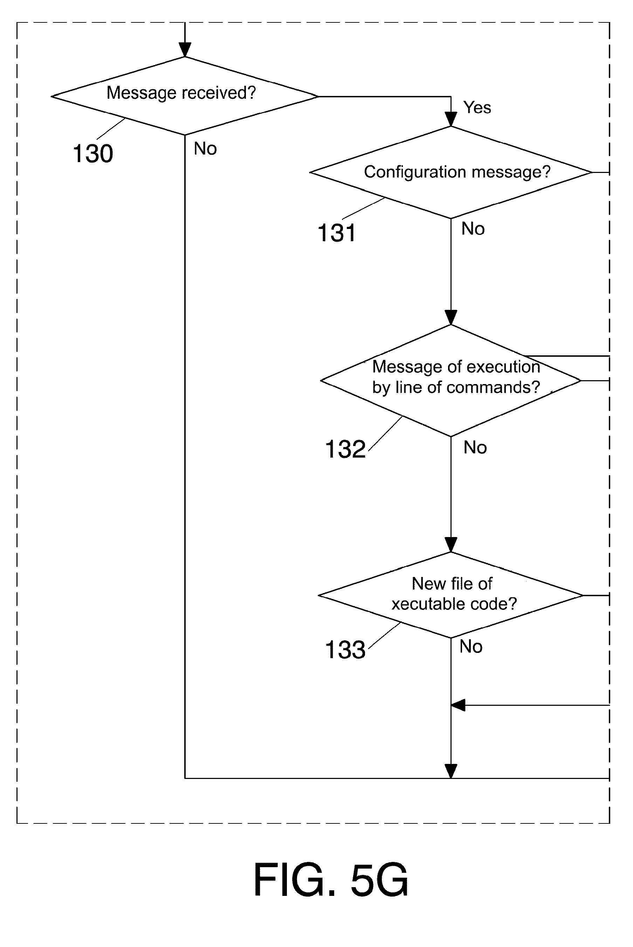

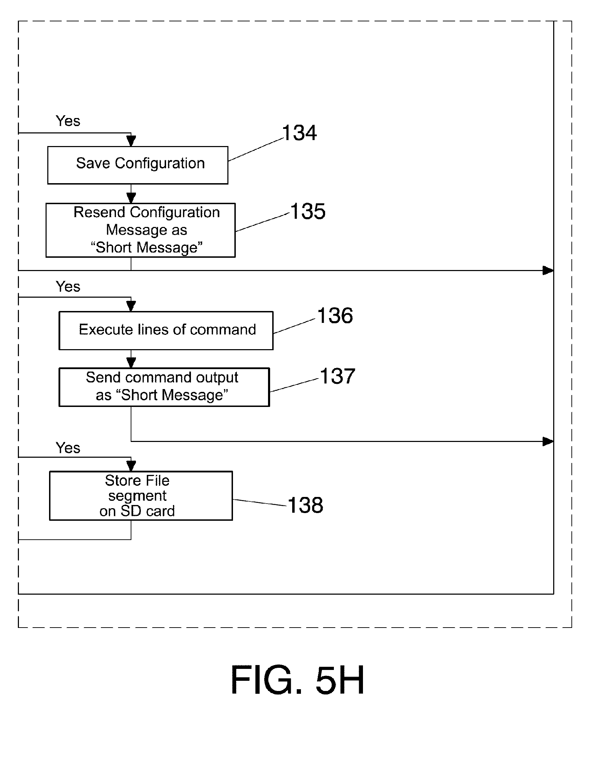

The method forming the object of the present invention, hereinafter, also called the SBDFile method, which is shown in figures 4 and 5, comprises the storage of data in files (file data logging) and their subsequent transmission (file transmission) thereby minimising the quantity of energy required to transfer the data via satellite. The power consumption in transferring Iridium SBD messages is the same for messages of different length, for this reason by maximising the use of the content of the transferred packages and reducing the number of transfers the final power consumption is reduced. This fact makes it possible to reduce by a large quantity the number and volume of the batteries used.

Also, the method minimises the overhead introduced (quantity of bytes used as protocol information). This purpose is achieved by minimising the size of the headers of the Iridium SBD messages, where information relative to the file that is being transmitted is indicated. Also, some of the parameters of said header have been designed to be optional, being only transmitted depending on the data and the status of the transmission. The complete list of parameters of the header used in the method is shown in the following table.

**Table of package headers**

| Parameter | Definition | Size |
|---|---|---|
| Type | Message format | 1 byte |
| Status | Transmission status information | 1 byte |
| TXid | File transmission index | 1 byte |
| TXcount | Current position of the file (3) | 2 bytes |
| ReTXid | File retransmission index (1) | 1 byte |
| ReTXcount | File retransmission position (1) | 2 bytes |
| Size | File size (2) | 2 bytes |
| Name | File name (2) | 12 bytes |

| | | |
|---|---|---|
| (1)Only if file retransmission is requested. (2)Only activated in the first transmission of the file. (3)The maximum size of the transmitted files is 64Kbytes (2 bytes per position). | | |

The header format indicates that each file segment must be unequivocally indexed by the identifiers TXid and TXcount. The TXid parameter is a single identifier byte of the file that is currently being transmitted. For each new file transmitted a new TXid identifier is obtained increasing the prior value. The TXcount indicator gives information on the position relative to the beginning of the file of the first byte of the segment that is being transmitted. It is important to note that the length of the header can change due to the use of the optional parameters, meaning that the number of bytes transmitted per segment can vary.

In order to be able to retransmit file segments automatically, the transmitted file must be stored in the local file system (SD card (21)). An internal list serves as a link between the TXid identifier and the real name of the file in the local file system. That list contains also an additional parameter to indicate the instant in time when the file was transmitted. This characteristic allows the TXid identifiers to be reused temporarily, reusing the older identifiers first. The use of one byte to represent the TXid parameter makes it possible to retransmit automatically segments of up to 256 files stored locally.

The transmission of files needs to indicate the name and size of the transmitted file in order to reorganise it subsequently upon reception. This characteristic is obtained using the SIZE and NAME optional header parameters. Those parameters are only sent when the TXcount parameter is zero (in other words, the start of the file). The name of the file is transmitted without path information (storage path), and is limited to 8 characters, one dot and 3 characters for the file extension.

When the message receiver (buoy or base station) detects that some file segment has not been correctly received, an automatic request for said segment is made. In this case, the RETXid and RETXcount optional parameters of the header are used to indicate the corresponding file identifier (TXid) and position on the file (TXcount). A field in the header's STATUS parameter ("retransmission request" field) is activated to identify that those fields are active. If those fields are detected as active during reception, the system tries to retransmit the required segment. In case of retransmission not being possible, another field of the STATUS parameter is used to indicate the error ("retransmission impossible"). Due to the use of optional parameters in the header, the segments sent can diverge in length in respect to the retransmitted segments. This problem is solved thanks to the use of the position of the data in respect to the start of the file (TXcount).

The header's STATUS parameter contains information about optional parameters sent and the type of message that is being transmitted, but also contains information that can be useful for detecting the status of the buoy instantaneously. The fields of the package header's STATUS parameter are: "RAM SBDFile", "retransmission request", "retransmission impossible", "file received complete", "correct functioning of the file system", "faulty message analysis", "wrong message reception", "faulty message transmission".

By way of an example, the overhead generated by the method forming the object of this application in the Mobile-Originated (MO-SDB) (340 bytes) messages transmitted and in the Mobile-Terminated (MT-SDB) (270 bytes) messages received is shown in the following table.
Overhead generated by the headers of the SBDFile method

| Segment type | MO-SBD | MT-SBD |
|---|---|---|
| First segment | 5.59% | 7.04% |
| First segment with retransmission | 6.47% | 8.15% |
| Other segments | 1.47% | 1.85% |
| Other segments with retransmission | 2.35% | 2.96% |

As a prior stage to executing the method described in the present application, the user initialises the drifter (1) before launching it into the water by means of extracting a magnet. This process activates the functioning of the reed relay (20) which feeds the internal circuitry. Upon initialising (figure 4) the drifter (1) reads the configuration stored in its internal Flash memory and verifies the functioning of the internal devices (30) (e.g. SD card (21)). If the verification is correct, a set of sounds are made by means of use of a "buzzer" to indicate to the user that the system has started up correctly.

Once the internal functions of the buoy (1) have been verified, a command line is activated through a series port (33) (in the case of having said option activated in the system configuration (32)) which allows access to all of the system's functions. This invention includes a system of command line task execution (33) through one of the external series ports (32) of the buoy (1). This interface of commands can also be accessed by means of the satellite communications system. The implemented command line (33) allows the status of the buoy to be verified or to execute particular tasks on a specific basis and remotely. Functions such as visualising device statistics, list of directories, file management, verification of the free space on the SD card, or the activation of the different modules of the system have been implemented in this command line.

This series interface is activated whenever the drifter awakens from its energy-efficient mode and deactivates automatically after a certain amount of time has passed without any interaction with the user, continuing with the autonomous functioning mode depending on the selected configurations (37).

Once the system (30) has booted, the capturing of the positioning data (GPS) (40,41) is activated and the measurements of the analogue circuit sensors (battery voltage and outer temperature sensor) (42,43). In the case of a fault in any of said systems, an acoustic signal will warn the user of the error in the data capture. The sampling period of said sensors is configured by means of a SBDFile short configuration message transmitted from the base station that contains the configuration of the periods for updating the system's different tasks (message "actualiz.cfg"/"update.cfg").

If the configuration has activated data storage in files and the transmission of said files (48), the date obtained is saved (51) in a file on the SD memory card (21). The transfer of the file through the Iridium SBD system will not be activated until the file transfer period (55,103) has concluded. In the case of the DBCP SVP-B (52) message transmission being active, a new message will be transferred to the satellite communications system (54,110-115). The message sent will encapsulate (53) the information from the sensors following the international standard for drifter message transfers SVP-B (Barometrical SVP) defined by the DBCP (Data Buoy Cooperation Panel) for Iridium SBD communications.

If any file is found in the "/TO_GZIP" folder (61) or "/TO_ZLIB" folder (64) it will be compressed using the implemented compressors GZIP (62) or ZLIB (65), and the file resulting from the compression (in the case of having a size that is smaller than the original) will be stored in the "/TO_SEND" folder (63,66).

To send a file using the method forming the object of the invention the file must be stored in the "/TO_SEND" folder of the local file system (60,63,66). Said method verifies the existence of files in said folder (67,106) and activates their transmission (68,108). Once activated, the file is stored in the "/SENT" folder (69,107) and the list of transmitted files is modified. That list, stored in the file "tx_index.ind", contains the TXid identifiers and the file name associated to said identification numbers. If finally a new transmission identifier is obtained, the file transmission (68,108) will be initiated by transmitting segments of the original file and encapsulating them in packages (109,121,123,124).

To avoid transmitting the same segment of a file an infinite number of times when the Iridium SBD communication fails, a maximum number of transmission retries per file segment (118,119) has been configured. When this counter reaches its maximum value, the transmission of the segment is ended. This method makes it possible to ensure that the power consumption will be limited in cases of poor coverage of the Iridium SBD network. Also, a second counter limits the maximum number of retries per activation of the electronics.

An important characteristic of the present method is the introduction of the "RAM SBDFile" file in the header's STATUS parameter. The messages with said field active, known as short messages (or RAM) SBDFile, are not stored on the SD card, nor are they treated as files. Thus, they are read, loaded and executed directly in the system's RAM memory. This mechanism allows the transfer of data even when the local file system (SD card) is not available (for example, when the card is full), but limits the size of the transfer to just one message. This type of message is used to transfer configurations (131), and execute remotely the commands implemented in the command line (132). This system gives programmers and advanced users the possibility of accessing the internal options of the buoy, to list files, to verify the status or execute functions stored in files.

The transfers made by the user of new configurations to the buoy are transferred as SBDFile short messages (131). These messages are sent as files attached to an email addressed to an email reception server of the Iridium SBD network. The data of these messages are stored in the Iridium network until the buoy makes a transfer to transmit or receive data, at which time they are downloaded to the Iridium modem (130).

To limit the maximum period of time without the buoy downloading new configurations a reception timer has been added that can be configured (in the "actualiz.cfg" configuration message). This timer is useful in the case of requiring to make file transfers with very long periods, but at the same time requiring being prepared to receive new configurations in a shorter period of time. If said timer (117) is activated, the buoy makes a transfer with an empty message every time the timer reaches its limit to try to download messages from the network (120). This timer resets every time a transfer is made correctly.

The microcontroller uses two information transfer modes selectable by the end user. The basic mode (DBCP SVP-B mode) is used by standard SVP drifters with communication via Iridium SBD. Said protocol, defined by the international body DBCP (Data Buoy Cooperation Panel), defines the format, length and position of the fields of bits where the sensor data is stored in the sent message. In this mode, the data is transferred (110-115) immediately after having been obtained by the buoy (52-54), thereby obtaining a very low delay in reception.

The second transfer mode, forming the object of the present invention, stores the measurements in files (51) of the SD card (21). A timer (48), whose period can be configured by the user, activates the transfer of said files. For their transmission, the files are segmented into packages (of a maximum length determined by the maximum message size permitted by the modem) which are transferred using a protocol with a very small overhead and with automatic retransmission of packages in case of failure (105-109). The values stored in the files are saved in fields of bits with a resolution superior to that obtained by the DBCP SVP-B mode.

In a station on earth (reception system), a programme on a computer takes care of receiving, rearranging, interpreting, and exporting the messages and files. Said programme downloads the messages from the Iridium network, transferred as messages in files attached to emails, and processes the content of the files and messages received. Following the download and verification of their content, the files and messages received are interpreted and exported to XML and KML formats so that they can be represented by means of visualisation tools.

The files can be compressed before their transfer using file compressor GZIP (56,57,61,62) or ZLIB (58,59,64,65). This compression reduces the final size of the file, and therefore minimises the consumption associated to its transmission. A study of the system's consumption demonstrates an increase of up to 55% in the lifespan of the buoy using file compression and transfer in respect to the message transfer used in the DBCP SVP-B protocol.

The file compression reduces the cost of the communications given that the Iridium SBD communications system is priced by number of bytes transmitted. This reduces the final cost of using the buoy. A cost study indicates a monthly saving of between 20-40% in the communication costs (for typical sampling periods of between 1 and 2 hours) compared with the transfer used in the DBCP SVP-B protocol.

The file storage system proposed in the present invention increases the final data retrieval delay, which is a fact that can be a functional impediment in tasks where obtaining the data with a low delay is necessary (for example, in spill tracking tasks or search and rescue operations). For this reason, a configuration system has been implemented for the sampling and transmission periods that is selectable by the end user, which adapts the delays obtained to the particular requirements of each application.

Another functionality of the invention is a time-activated configurations system. In this system, a configuration message is stored in the memory without being applied. This message includes an activation time after which it must be configured automatically inside the buoy (34-36). With this functionality, the start of the periodic configurations can be configured with accuracy, guaranteeing the instant in which the sampling and transmission tasks will be performed. One added advantage of this characteristic is the configuration of specific operating modes which can be activated according to time, such as for example a device recovery mode wherein the buoy sends its position with a much higher sampling period. This characteristic facilitates positioning of the instrument for its collection as of a date determined by the user.

Thanks to the two-way characteristic of the satellite communications system used, the file transfer system has been implemented allowing also the download of files in the buoy (transferring them from a station on earth) (133,138). This functionality is used to load code files that the buoy can execute. This type of code loading allows a dynamic execution of functions to add new sensors or implement new functionalities, or even to solve problems with code remotely. These dynamic executions can be configured by means of the use of various timers.

As show in figure 5, in the case of having activated the transmission of any file or SBDFile short message, or the transmission of a short message with DBCP SVP-B format (72), the data transfer is initiated through the Iridium SBD modem (73,100). The files transmitted by means of the SBDFile method are sent through the Iridium SBD communications system (101,122) in different segments with a maximum length that is equal to the maximum size of the Iridium SBD message. Once the Iridium SBD transfers have ended, the correct reception of any message that has been transmitted from the base station (130) is verified. The messages received may be short messages (Short SBDFile) (131,132) or file segments following the SBDFile format (133). The short messages may contain new configurations (131), requests to send the latest configurations (131), or commands of the command interface (132). These messages are processed without being stored on the SD card, thereby guaranteeing functioning even in case of failure of the external memory. The files received (126) may be compressed by means of the GZIP or ZLIB compression algorithms (127), being automatically decompressed upon reception once the download has ended (128). The content of said files may contain code to be executed in the buoy by means of the "exec" command of the command line.

In the case of a transmission failure of the Iridium SBD messages due to poor coverage of system failures, various counters have been introduced (113,116,119) which make it possible to limit the maximum number of message transmission or reception retries. The maximum value of these counters may be configured by the user by means of the "transmit.cfg" configuration messages. In this way, the user can define the maximum number of retries to transmit DBCP SVP-B messages (113), messages (116) or SBDFile file segments (119), or of retries to download data from the Iridium SBD network (120), so as to limit the system's consumption. In this type of configuration message it is further permitted to configure the activation of storage of all the Iridium SBD messages transmitted or received, in addition to the maximum waiting time to obtain the minimum coverage value required to transmit through the Iridium SBD system (102).

Once the transmission of all the messages or files has ended, and the reception of all messages that are found on the Iridium network (129), the system verifies the minimum quantity of time remaining to activate the configured tasks (depending on the current instant and that of the configured periods) (76). Subsequently, the system will enter its energy-efficient mode, leaving only the real time clock (RTC) activated which will awaken the electronics following the previously measured period of time (78).

In the case of having received a configuration message through the Iridium SBD system, once all the tasks pending for that execution period have ended (74), the new configuration is stored in the system's Flash memory and the internal functioning parameters are modified according to the received configuration (75). This configuration activation system guarantees that no configuration that could affect the internal behaviour can block the functioning of the buoy while the buoy is in use.

Once a new configuration is downloaded from the Iridium network (131), this configuration is stored in the RAM memory of the microcontroller (134), waiting to be activated once the tasks corresponding to the current configuration have ended (74). When the system receives a new configuration (131), this configuration is retransmitted to the base station for the purpose of warning the user of the correct performance of the change in configuration (135).

There are various types of configuration messages, depending on the options they allow to be configured. All of them end with a cyclical redundancy type error control code (CRC32), to guarantee a correct arrival of the data.

| Name of the sent file (SBDFile short message) | Explanation | Type |
|---|---|---|
| internal.cfg | Internal parameters of the logic (process speed of the microcontroller, debug level, etc.). | Internal configurations |
| measure.cfg | Configuration of how the data is captured from the GPS (number of valid positions, maximum capture time) and analogue sensors (sampling frequency and number of samples), and of the compression system to be used (None, ZLIB or GZIP). | Measurement configurations |
| transmit.cfg | Transmission configurations (maximum number of retries, maximum signal waiting time, etc.). | Transmission configurations |
| commands.cfg | Configuration of commands that are executed automatically on the basis of sampling periods. | Command configurations |
| actualiz.cfg | Configuration of the periods for updating the sampling, transmission and command tasks. | Update configurations |
| timedact.cfg | Configuration of time-activated update periods (identical to "actualiz.cfg" ("update.cfg") with an activation date and time). | Timed update configurations |
| config.get | Request for transmission of the configurations stored in the system (the content of the file is the name of the configuration file to be sent, e.g. "actualiz.cfg"/"update.cfg"). | Configuration requests |
| execute | Request for the list of commands stored in the message. The output or result of the execution of the commands is sent as an SBDFile short message with the name "xxxxxxxx.rsp". | Execution of commands |

The configuration message "actualiz.cfg"/"update.cfg" allows the user to modify the periodicity for measuring data, transferring DBCP SVP-B messages, transferring files, making connections to the Iridium network so as to download new configurations or to periodically execute commands. If the update period contained in any of the above fields is equal to zero, the associated task is disabled (e.g. disable file transmission and transmit only DBCP SVP-B messages).

The "timedact.cfg" type of configuration message allows transmission of an "actualiz.cfg"/"update.cfg" type of configuration that is time-activated on a date and time defined by the user. A timer verifies the instant in time in which the configuration must be activated (34), and awakens the buoy from its energy-efficient mode to apply it in the system (35). Once the system has been configured a confirmation of the new system configuration is sent by means of an SBDFile short message to the base station (36). This allows the user to define the sampling and transmission behaviour that is required for execution in a predefined instant in time.

The user can transmit from the base station an "execute" type message (132) with various commands to be executed in the buoy (136). These commands are defined in the command line accessible through the series port in start-up, and allows the status of the devices to be obtained, statistics on use or to access internal functions (e.g. list of files of the SD card).

When the user transmits an SBDFile short message of command execution, the method downloads it at the moment of performing an Iridium SBD transfer (130). Once the correct format of the message has been verified (132), the message is executed immediately so as to obtain the response to said execution within the minimum time lapse (136). In the case of the execution returning a chain of text, this result is transferred as an SBDFile short message (104,111,114,116,125) through the Iridium SBD system (137). This implementation of the command interface allows the end user to control and verify the behaviour of all the internal functions of the buoy remotely.

The user can transfer a file from the station on earth to the buoy with code that can be executed by the microcontroller of the buoy, by sending it in segments or packages (133,138). This feature has been designed to facilitate remote modification of the code that is executed in the buoy. Once all segments of a file have been transmitted to the buoy, these are rearranged and stored in a file of the SD card (138). The file is decompressed after having been received if it has been compressed using the GZIP or ZLIB compression algorithms in the base station (126-128).

The "exec" command of the command line allows execution in the buoy of the files received. The "exec" command loads the content of the file in the RAM memory and runs a cyclical redundancy check (CRC32) to guarantee the correct content thereof. In the case of the content being correct, the version codes and library revisions used are verified so as to guarantee the correct location of the data in the memory. Following these verifications, the content of the programme counter (PC) of the CPU is noted at the start of the file content and the codes it contains are executed. After the dynamic execution has ended, the programme counter is returned to the normal flow of code and the continuous execution of the system. This mechanism of loading and dynamic execution makes it possible to modify the buoy's process to solve software faults or to add new functionalities (such as adding new sensors or transmitters).

The "exec" command, like all other commands implemented in the command line, can be configured to be activated periodically in the buoy by means of the "commands.cfg" and "actualiz.cfg/"update.cfg" type of configuration messages. The "commands.cfg" configuration messages contain the configuration of five different executions of commands (command lines of up to 40 characters) that the user can introduce. These five commands are identified as "Periodic" (38,39), "Measure 1" (44,45)), "Measure 2" (46,47), "Transmission" (70,71) and "Save" (49,50). The commands introduced in these fields will be activated (if the text of the configured command contains any character) according to the periods indicated in the "actualiz.cfg/update.cfg" configuration message. The "actualiz.cfg/update.cfg" configuration message contains the activation periods of the first four commands, whereas the "Save" command (49,50) will be activated in the instant prior to the default storage code (51). This characteristic makes it possible to modify the file storage format in order to adapt to future requirements or to store different parameters to those configured by default.

In order to avoid a fault contained in the executable files or in the firmware code from blocking the behaviour of the buoy, a timer has been introduced which resets the buoy's electronics in the case of reaching its maximum value (31,77) (behaviour known as "watchdog"). This timer is activated the moment the system wakes up from its energy-efficient mode (31) and is deactivated (77) when the energy-efficient mode is newly activated (78). The maximum value of that timer can be modified by the user by means of the "internal.cfg" configuration messages.

## Claims

1. Method for transferring data between at least one current-measuring Lagrangian buoy for ocean and coastal environments and one base station, which comprises that the at least one buoy incorporates at least one Iridium antenna, and at least one GPS antenna, one GPS receiver, parameter-measuring sensors, an Iridium SBD communications modem and an external removable memory, which makes use of a satellite communications system by means of the Iridium SBD protocol, **characterised in that** it comprises selecting a data transfer mode between a conventional mode and a mode that comprises the following phases:
i) the user configuring a period for capturing data by the parameter-measuring sensors and the GPS receiver and a period for transferring data from the buoy to the base station;
ii) the buoy capturing data by means of the parameter-measuring sensors and the GPS receiver at the moments corresponding to the data capture period established in phase i);
iii) storing the data captured during the data transfer period established in phase i) in at least one first file of the external removable memory and selecting it;
iv) segmenting the selected file in packages of a maximum length defined by the Iridium SBD communications modem when the data transfer period has expired;
v) sending the packages from the buoy to the base station by means of the Iridium SBD protocol;
vi) the buoy checking the receipt of short messages and packages from the base station and;
vii)the base station rearranging and verifying the data contained in the Iridium SBD messages received

2. Method for transferring data, according to claim 1, **characterised in that** as stages previous to the segmentation of phase iv), it comprises:
• compressing, when the data transfer period has expired, the at least one first file; and,
• comparing the sizes of the first original file and the first compressed file and selecting the smaller-sized one.

3. Method for transferring data, according to claim 1, **characterised in that** the conventional data transfer mode comprises the sending of data between the buoy and the base station by means of a DBCP SVP-B protocol.

4. Method for transferring data, according to claim 2, **characterised in that** it comprises compressing the at least one first file by means of a compression algorithm selected between GZIP and ZLIB.

5. Method for transferring data, according to claim 1, **characterised in that** the base station sends short messages and files by means of the Iridium SBD protocol to the at least one buoy.

6. Method for transferring data, according to claim 5, **characterised in that** previous to the sending of files from the base station to the at least one buoy, the base station comprises compressing the data contained in the files by means of a compression algorithm selected between GZIP and ZLIB.

7. Method for transferring data, according to claim 6, **characterised in that** the information contained in the compressed files comprises being decompressed in the buoy and subsequently executed.

8. Method for transferring data, according to claim 5, **characterised in that** the short messages sent from the base station to the buoy and whose reception is verified in phase vi) comprise information selected between a new buoy configuration to be activated in the buoy, a request to issue configurations for the buoy to send the base station a record of the latest activated configurations and commands to be executed in the buoy.

9. Method for transferring data, according to claim 8, **characterised in that** when the short message received comprise a new buoy configuration, it comprises the following phases:
• activating the new configuration, once tasks of the previous configuration have ended; and
• sending a short message from the buoy to the base station with the new configuration received to confirm the change in configuration made.

10. Method for transferring data, according to claim 8, **characterised in that** the short messages for the new buoy configuration sent from the base station are selected between:
• type 1 short messages, which comprise configuring internal operating parameters of the buoy;
• type 2 short messages, which comprise modifying the configuration of the data captures of the GPS receiver and the parameter-measuring sensors and selecting the algorithm for compression of the information;
• type 3 short messages, which comprise modifying parameters related to the transmission of the data by means of the Iridium SBD protocol;
• type 4 short messages, which comprise executable commands selected by the user for their execution in the buoy;
• type 5 short messages, which comprise configuring timers which control the data capture period on the part of the parameter-measuring sensors and the GPS receiver, the data transfer period from the buoy to the base station and the command execution period in the buoy; and,
• type 6 short messages, which comprise establishing a time and date of activation of a timer in the buoy for configuring the timers that control the data capture period on the part of the parameter-measuring sensors and the GPS receiver, the data transfer period from the buoy to the base and the command execution period in the buoy.

11. Method for transferring data, according to claim 1, **characterised in that** it comprises retransmitting automatically the packages sent in phase vi) in the case of a reception failure.

12. Method for transferring data, according to claim 1, **characterised in that** it comprises the user configuring a timer with a determined period for the buoy to verify the existence of short messages and packages pending reception.

13. Method for transferring data, according to claim 1, **characterised in that** it comprises transferring from the base station to the buoy, commands executable in the buoy in a mode selected between directly through a series port and remotely by means of an Iridium SBD protocol.

14. Method for transferring data, according to claim 1, **characterised in that** following the download of the messages received in phase vii) it comprises exporting the information contained in the messages to XML and KML formats for the information to be represented by means of visualisation tools.

15. Current-measuring Lagrangian buoy for ocean and coastal environments, according to any of the preceding claims, **characterised in that** it comprises at least:
• one cylindrical element with its lower base open and which presents a recess on the internal face of the lower end of the cylindrical element;
• one U-shaped element which presents a recess on the outer face of the vertical branches, a hole on its inner face and a protrusion in the central zone of the horizontal branch which comprises a housing for a T-shaped rod;
• an o-ring situated between the cylindrical element and the U-shaped element to seal the inside of the device.
• A sealing element selected between a connector and a vacuum-tight bushing, situated in the hole of the U-shaped element to place measuring sensors;

16. Current-measuring Lagrangian buoy for ocean and coastal environments, according to claim 15, **characterised in that** it comprises a plurality of safety and flotation foams situated on the outer face of the cylindrical element and surrounding it.

17. Current-measuring Lagrangian buoy for ocean and coastal environments, according to claim 15, **characterised in that** it comprises anchoring means on the outer face of the base of the U-shaped element.

18. Current-measuring Lagrangian buoy for ocean and coastal environments, according to claim 15, **characterised in that** the cylindrical element together with the safety and flotation foam presents a maximum outer diameter of 140 mm, and a maximum length of 400 mm.
